# EUROPÄISCHE PATENTSCHRIFT

(11) **EP 0 803 675 B1**
(45) Veröffentlichungstag und Bekanntmachung des Hinweises auf die Patenterteilung: **20.09.2000**
(21) Anmeldenummer: 97106217.9
(22) Anmeldetag: 16.04.1997
(51) Int. Cl.: F16L 25/00, F16L 25/06

(54) **Rohrverbindung, insbesondere zum Verbinden zweier rohrförmiger Rumpfteile eines Flugkörpers**
Tube connection in particular for connecting two tubular fuselage parts of a flying body
Raccord pour tubes en particulier pour connecter des éléments tubulaires du fuselage d'un corps volant

(30) Priorität: 22.04.1996 DE 19615716
(43) Veröffentlichungstag der Anmeldung: 29.10.1997
(73) Patentinhaber: Bodenseewerk Gerätetechnik GmbH, 88662 Überlingen (DE)
(72) Erfinder: Bross, Dirk, 88662 Überlingen (DE); Fisch, Peter Gerd, 88662 Überlingen (DE)
(74) Vertreter: Weisse, Jürgen, Dipl.-Phys.

(56) Entgegenhaltungen:
- US-A- 4 348 956
- US-A- 5 290 974

## Beschreibung

Die Erfindung betrifft eine Rohrverbindung, insbesondere zum Verbinden zweier rohrförmiger Rumpfteile eines Flugkörpers.

Bei bekannten Rohrverbindungen werden Rohrteile, die in ihren zu verbindenden Randbereichen unterschiedliche Durchmesser aufweisen, ineinandergeschoben und durch radiale Schrauben miteinander verbunden. Dabei müssen, um einen Formschluß zu erzielen, durch das Festziehen der Schrauben das innere Rohrteil radial aufgeweitet oder das äußere Rohrteil zusammengedrückt werden. Diese Deformation verbraucht einen großen Teil der Schraubkraft. Der erreichbare Formschluß ist schlecht.

Die bekannte Art der Rohrverbindung ist insbesondere nicht zufriedenstellend beim Verbinden von rohrförmigen Rumpfteilen hochagiler Flugkörper. Bei diesen treten extreme Beanspruchungen der Rohrverbindungen auf.

Der Erfindung liegt die Aufgabe zugrunde, eine hochfeste und hochsteife Rohrverbindung zu schaffen.

Die Rohrverbindung soll lösbar sein. Die Rohrverbindung soll eine leichte Montage ermöglichen. Kosten und Fertigungsaufwand sollen gering sein. Das Bauvolumen soll gering sein. Weiterhin soll die Rohrverbindung einen großen freien Querschnitt freilassen. Vergrößerungen des Außendurchmessers durch die Rohrverbindung sollen vermieden werden. Die Rohrverbindung soll weiterhin spielfrei sein.

Erfindungsgemäß wird die gestellte Aufgabe dadurch gelöst, daß
(a) jeder der Rohrteile längs des mit dem anderen Rohrteil zu verbindenden Randes auf einem ersten Umfangsabschnitt einen gegenüber einem zweiten Umfangsabschnitt verminderten Außendurchmesser aufweist, der abzüglich einer Zusammenfüge-Toleranz dem Innendurchmesser des zweiten Umfangsabschnitts entspricht,
(b) die Rohrteile so zusammengefügt sind, daß von jedem Rohrteil der Umfangsabschnitt mit geringerem Außendurchmesser in einen Umfangsabschnitt mit größerem Außendurchmesser des jeweils anderen Rohrteils eingeschoben ist, und
(c) die Umfangsabschnitte mit radialen Bohrungen für Verbindungsschrauben versehen sind.

Vorzugsweise sind dabei innerhalb der so zusammengefügten Umfangsabschnitte Ringabschnitte mit Gewindebohrungen angeordnet sind, die mit den radialen Bohrungen der Umfangsabschnitte fluchten.

Nach der Erfindung wird somit eine "asymmetrische Radialverschraubung" vorgesehen. Eine solche asymmetrische Radialverschraubung hat den Vorteil, daß die beiden Rohrteile senkrecht zur Trennlinie der beiden Umfangsabschnitte in einem kleinen Bereich frei zueinander verschoben werden können. Dadurch entstehen beim Verschrauben keine großen radialen Eigenspannungen. Das gestattet es, einen hervorragenden Formschluß herzustellen. Bei einer Belastung der asymmetrischen Radialverschraubung mit einem Biegemoment wird die Kraft hauptsächlich über die Schrauben übertragen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: ist eine perspektivische Darstellung zweier durch eine asymmetrische Radialverschraubung zu verbindender Rohrteile im auseinandergezogenen Zustand.
- Fig.2: ist eine perspektivische Darstellung der beiden Rohrteile im verbundenen Zustand.

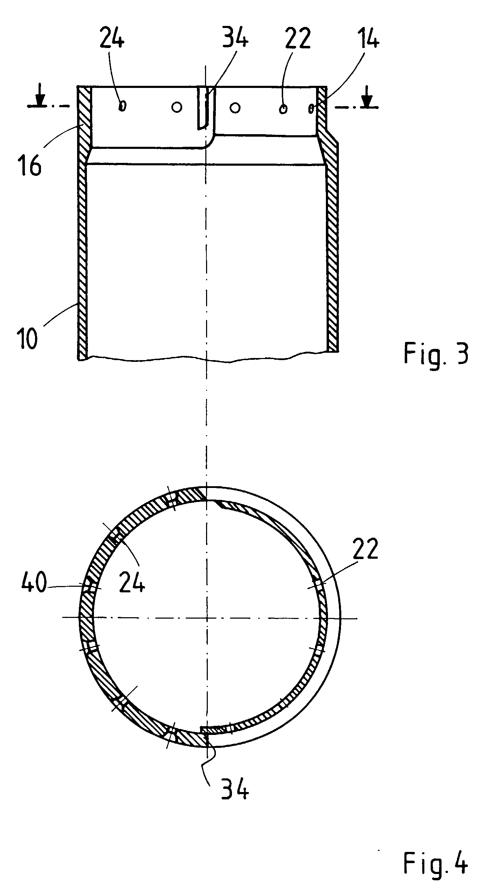

- Fig.3: zeigt einen Längsschnitt eines Endabschnitts eines der Rohrteile von Fig.1 und 2.
- Fig.4: zeigt einen Querschnitt des Endabschnitts von Fig.3.

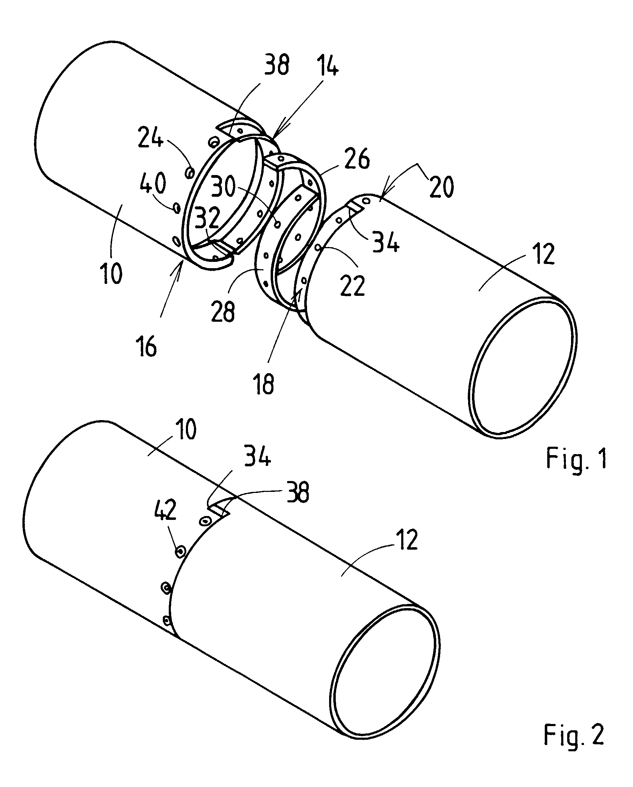

In Fig.1 ist mit 10 ein erster Rohrteil bezeichnet. Der erste Rohrteil 10 soll mit einem zweiten Rohrteil 12 verbunden werden. Die Rohrteile 10 und 12 sind rohrförmige Teile des Rumpfes eines Flugkörpers.

Der Rohrteil 10 weist längs des zu verbindenden Randes auf einem ersten, sich über etwa 180° erstreckenden Umfangsabschnitt 14 einen gegenüber einem zweiten Umfangsabschnitt 16 verminderten Außendurchmesser auf. Der Außendurchmesser des ersten Umfangsabschnitts 14 entspricht abzüglich einer Zusammenfüge-Toleranz dem Innendurchmesser des zweiten Umfangsabschnitts 16. In entsprechender Weise weist der Rohrteil 12 längs des zu verbindenden Randes auf einem ersten, sich über etwa 180° erstreckenden Umfangsabschnitt 18 einen gegenüber einem zweiten Umfangsabschnitt 20 verminderten Außendurchmesser auf. Der Außendurchmesser des ersten Umfangsabschnitts 18 entspricht abzüglich einer Zusammenfüge-Toleranz dem Innendurchmesser des zweiten Umfangsabschnitts 20. Tatsächlich sind die zu verbindenden Randteile der beiden Rohrteile 10 und 12 übereinstimmend ausgebildet. Der Rohrteil 12 ist jedoch mit seinem Randteil gegenüber dem Rohrteil 10 um 180° um die Rohrachse verdreht. Die Rohrteile 10 und 12 sind dann so zusammengefügt, daß von jedem Rohrteil 10 oder 12 der Umfangsabschnitt 14 bzw. 18 mit geringerem Außendurchmesser in einen Umfangsabschnitt 16 bzw. 20 mit größerem Außendurchmesser des jeweils anderen Rohrteils 21 bzw. 10 eingeschoben ist. Die Umfangsabschnitte 14, 16, 18 und 20 sind mit radialen Bohrungen 22 bzw. 24 für Verbindungsschrauben versehen.

Innerhalb der so zusammengefügten Umfangsabschnitte 14, 20 und 18, 16 sind Ringabschnitte 26 bzw. 28 mit Gewindebohrungen 30 angeordnet. Die Gewindebohrungen 30 fluchten mit den radialen Bohrungen 22 und 24 der Umfangsabschnitte 14, 20 bzw. 18, 16. Die Ringabschnitte 26 und 28 erstrecken sich jeweils über 180°. Dabei liegt der Ringabschnitt 26 im Bereich der Umfangsabschnitte 14 und 20. Der Ringabschnitt 28 liegt im Bereich der Umfangsabschnitte 18 und 16.

Zwischen den Umfangsabschnitten 14 und 16 bzw. 18 und 20 eines Rohrteils 10 bzw. 12 ist jeweils ein Längsschlitz 32 bzw. 34 gebildet. In den Längsschlitz 32 bzw. 34 ist ein zwischen den Umfangsabschnitten 18 und 20 bzw. 14 und 16 des anderen Rohrteils 12 bzw. 10 gebildeter Stufenübergang 36 bzw. 38 einschiebbar. Bei der dargestellten Ausführung ist an jedem der Rohrteile 10 und 12 ein Längsschlitz 32 bzw. 34 und diametral dazu gegenüberliegend ein Stufenübergang 36 bzw. 38 vorgesehen.

Die Umfangsabschnitte 16 und 20 mit größerem Außendurchmesser weisen auf der Außenseite anschließend an die radialen Bohrungen 24 Senkungen 40 für Schraubenköpfe 42 auf.

## Patentansprüche

1. Rohrverbindung zum Verbinden zweier Rohrteile (10, 12) insbesondere zum Verbinden zweier rohrförmiger Rumpfteile eines Flugkörpers, wobei
(a) jeder der Rohrteile (10,12) längs des mit dem anderen Rohrteil (12 bzw. 10) zu verbindenden Randes auf einem ersten Umfangsabschnitt (14 bzw. 18) einen gegenüber einem zweiten Umfangsabschnitt (16 bzw. 20) verminderten Außendurchmesser aufweist, der abzüglich einer Zusammenfüge-Toleranz dem Innendurchmesser des zweiten Umfangsabschnitts (16 bzw. 18) entspricht,
(b) die Rohrteile (10,12) so zusammengefügt sind, daß von jedem Rohrteil (10,12) der Umfangsabschnitt (14,18) mit geringerem Außendurchmesser in einen Umfangsabschnitt (16,20) mit größerem Außendurchmesser des jeweils anderen Rohrteils (12 bzw. 10) eingeschoben ist und
(c) die Umfangsabschnitte (14, 16;18,20) mit radialen Bohrungen (22,24) für Verbindungsschrauben versehen sind.

2. Rohrverbindung nach Anspruch 1, dadurch gekennzeichnet, daß innerhalb der so zusammengefügten Umfangsabschnitte (14,20;18,16) Ringabschnitte (26,28) mit Gewindebohrungen (30) angeordnet sind, die mit den radialen Bohrungen (22,24) der Umfangsabschnitte (14,20;18,16) fluchten.

3. Rohrverbindung nach Anspruch 2, **dadurch gekennzeichnet, daß**
(a) jeder der Umfangsabschnitte (14,16;18,20) sich über im wesentlichen 180° erstreckt,
(b) die Rohrteile (10,12) an ihren zu verbindenden Enden im wesentlichen übereinstimmend ausgebildet und
(c) mit ihren Umfangsabschnitten (14,16;18,20) um 180° zueinander winkelversetzt zusammengefügt sind.

4. Rohrverbindung nach Anspruch 3, dadurch gekennzeichnet, daß zwischen den Umfangsabschnitten (14,16;18,20) eines Rohrteils (10,12) jeweils ein Längsschlitz (32,34) gebildet ist, in welchen ein zwischen den Umfangsabschnitten (18,20;14,16) des anderen Rohrteils (12,10) gebildeter Stufenübergang (38) einschiebbar ist.

5. Rohrverbindung nach Anspruch 4, **dadurch gekennzeichnet, daß** an jedem der Rohrteile ein Längsschlitz (32,34) und diametral dazu gegenüberliegend ein Stufenübergang (38) vorgesehen ist

6. Rohrverbindung nach einem der Ansprüche 3 bis 5, **dadurch gekennzeichnet, daß** die Ringabschnitte (26,28) sich jeweils über etwa 180° erstrecken.

7. Rohrverbindung nach Anspruch 6, **dadurch gekennzeichnet, daß** jeder Ringabschnitt (26,28) sich über den Winkelbereich eines zugehörigen Umfangsabschnitts (14,16;18,20) erstreckt.

8. Rohrverbindung nach einem der Ansprüche 1 bis 7, **dadurch gekennzeichnet, daß** die Umfangsabschnitte (16,20) mit größerem Außendurchmesser auf der Außenseite anschließend an die radialen Bohrungen (24) Senkungen (40) für Schraubenköpfe (42) aufweisen.

## Claims

1. Tube connection for connecting two tube portions (10,12), particularly for connecting two body portions of a missile, ***wherein***
(a) each of the tube portions (10,12) has along the edge to be connected to the other tube portion (12 respectively 10) a first circumferential section (14 respectively 18) with a reduced outer diameter as compared to a second circumferential section (16 respectively 20), which outer diameter corresponds to the inner diameter of the second circumferential section minus a connecting tolerance,
(b) the tube portions (10,12) are connected such that from each tube portion (10,12) the circumferential section (14,18) with the reduced outer diameter is inserted in the circumferential section (16,20) with the increased outer diameter of the respective other tube portion ( 12 respectively 10) and
(c) the circumferential sections (14,16,18,20) are provided with radial bores (22,24) for connecting screws.

2. Tube connection according to claim 1, characterised in that, annular sections (26,28) having threaded bores (30), are arranged within the thus connected circumferential sections (14,16,18,20), which annular sections are aligned to radial bores (22,24) of the circumferential sections (14,16,18,20).

3. Tube connection according to claim 2, characterised in that,
(a) each of the circumferential sections (14,16,18,20) extends through 180 degrees,
(b) the tube portions (10, 12) are generally of identical shape at their connecting ends and
(c) they are angularly offset by 180 degrees with their circumferential sections (14, 16, 18, 20).

4. Tube connection according to claim 3, characterised in that, one longitudinal slit (32,34) is formed between the circumferential sections (14,16,18,20) of each tube portion (10,12), in which a step passage (38) formed between the circumferential sections (14,16,18,20) of the other tube portion (12,10) is accomodated.

5. Tube connection according to claim 4, characterised in that, a longitudinal slit (32,34) is provided on each tube portion and a step passage (38) is provided diametral opposite thereto.

6. Tube connection according to one of the claims 3 to 5, characterised in that the annular sections (26, 28) each extend through about 180 degrees.

7. Tube connection according to claim 6, characterised in that, every annular section (26, 28) extends through the angular range of an associated circumferential section (14, 16, 18, 20).

8. Tube connection according to one of the claims 1 to 7, characterised in that, the circumferential sections (16,20) with increased outer diameter have depressions (40) for screwheads (42) on the outer side adjacent to the radial bores (24).

## Revendications

1. Connexion de tuyaux destinée à relier deux éléments de tuyau (10,12), destinée notamment à relier deux éléments de fuselage tubulaires d'un missile,
a) chacun des éléments de tuyau (10,12) présentant le long du bord devant être relié à l'autre élément de tuyau (12 et 10 respectivement) sur une première section circonférentielle (14 et 18 respectivement) un diamètre extérieur plus petit qu'une seconde section circonférentielle (16 et 20 respectivement), diamètre qui, après déduction d'une tolérance d'assemblage, correspond au diamètre intérieur de la seconde section circonférentielle (16 et 18 respectivement),
b) les éléments de tuyau (10,12) étant assemblés de telle façon que la section circonférentielle (14,18) de chaque élément de tuyau (10,12) de diamètre extérieur plus petit est rentrée dans une section circonférentielle (16,20) de l'autre élément de tuyau respectivement (12 et 10 respectivement) de diamètre extérieur plus grand, et
c) les sections circonférentielles (14,16 ; 18,20) étant pourvues de perçages radiaux (22,24) pour vis de connexion.

2. Connexion de tuyaux selon la revendication 1, **caractérisée par le fait que** des sections circulaires (26,28) munies de perçages filetés (30) s'alignant sur les perçages radiaux (22,24) des sections circonférentielles (14,20 ; 18,16) sont disposées à l'intérieur des sections circonférentielles (14,16 ; 18,16) ainsi assemblées.

3. Connexion de tuyaux selon la revendication 2, **caractérisée par le fait que**
a) chacune des sections circonférentielles (14,16 ; 18,20) s'étire essentiellement sur 180°,
b) les éléments de tuyau (10,12) sont configurés à leurs extrémités devant être reliées essentiellement de façon à correspondre l'un avec l'autre et
c) sont assemblés avec leurs sections circonférentielles (14,16 ; 18,20) en étant décalés l'un par rapport à l'autre d'un angle de 180°.

4. Connexion de tuyaux selon la revendication 3, **caractérisée par le fait qu'**une fente longitudinale (32,34) est formée à chaque fois entre les sections circonférentielles (14,16 ; 18,20) d'un élément de tuyau (10,12), fente dans laquelle un passage à échelons (38) formé entre les sections circonférentielles (18,20 ; 14,16) de l'autre élément de tuyau (12,10) est susceptible d'être rentré.

5. Connexion de tuyaux selon la revendication 4, **caractérisée par le fait qu'**une fente longitudinale (32,24) est prévue au niveau de chacun des éléments de tuyau et qu'un passage à échelons (38) est prévu en étant opposé diamétralement à celle-ci.

6. Connexion de tuyaux selon l'une des revendications 3 à 5, **caractérisée par le fait que** les sections circulaires (26,28) s'étirent à chaque fois sur à peu près 180°.

7. Connexion de tuyaux selon la revendication 6, **caractérisée par le fait que** chaque section circulaire (26,28) s'étire sur le domaine angulaire d'une section circonférentielle associée (14,16 ; 18,20).

8. Connexion de tuyaux selon l'une des revendications 1 à 7, **caractérisée par le fait que** les sections circonférentielles (16,20) de diamètre extérieur plus grand présentent sur le côté extérieur, de façon adjacente aux perçages radiaux (24), des logements (40) pour têtes de vis (42).
